# EUROPÄISCHE PATENTSCHRIFT

(11) **EP 4 183 643 B1**
(45) Veröffentlichungstag und Bekanntmachung des Hinweises auf die Patenterteilung: **03.09.2025**
(21) Anmeldenummer: 22206276.2
(22) Anmeldetag: 09.11.2022
(51) Int. Cl.: B60T 8/1755, B60W 30/085, B60W 40/10, B60W 40/112, B60W 40/114, B60W 30/08

(54) **VERFAHREN ZUR ERKENNUNG EINER UNFALLSITUATION EINES NUTZFAHRZEUGS**
METHOD FOR DETECTING AN ACCIDENT SITUATION OF A COMMERCIAL VEHICLE
PROCÉDÉ DE DÉTECTION D'UNE SITUATION D'ACCIDENT D'UN VÉHICULE UTILITAIRE

(30) Priorität: 22.11.2021 DE 102021130478
(43) Veröffentlichungstag der Anmeldung: 24.05.2023
(73) Patentinhaber: MAN Truck & Bus SE, 80995 München (DE)
(72) Erfinder: Wagner, Philipp, 80995 München (DE); Heise, Thomas, 80995 München (DE)
(74) Vertreter: v. Bezold & Partner Patentanwälte - PartG mbB

(56) Entgegenhaltungen:
- EP-A1- 3 286 032
- WO-A1-2005/082680
- DE-A1- 10 057 563
- DE-A1- 10 239 406
- DE-A1- 102007 059 414
- DE-A1- 102011 118 149
- DE-A1- 102012 107 188
- DE-A1- 102017 201 936
- DE-T5- 112015 000 157

## Beschreibung

Die Erfindung betrifft ein Verfahren und eine Steuereinheit zur Erkennung einer Unfallsituation eines Nutzfahrzeugs, sowie ein Nutzfahrzeug mit der Steuereinheit.

Zur Erkennung von Unfallsituationen sind bei Personenkraftwagen üblicherweise Airbag-Steuergeräte ausreichend, um Fahrzeugbeschleunigungen und -bewegungen auszuwerten und je nach ermittelter Schwere der Unfallsituation die passenden Airbags mit der geeigneten Intensität zu zünden.

Für Nutzfahrzeuge ist eine zuverlässige Erkennung einer Unfallsituation deutlich schwieriger, da die Masse der Nutzfahrzeuge größer ist und auch schwere Kollisionen je nach Unfallgegner nicht zu solchen Beschleunigungswerten des Nutzfahrzeuge führen müssen, die eine zuverlässige Erkennung einer Unfallsituation erlauben.

Ferner ist es notwendig, bei Nutzfahrzeugen nach verschiedenen Unfallszenarien zu unterscheiden, da z. B. eine Kollision je nach Kollisionsrichtung und -intensität zu unterschiedlichen Schäden führen können und daher bei Nutzfahrzeugen differenziert zu betrachten sind. Beispielsweise führt eine Heckkollision eines Nutzfahrzeugs, insbesondere wenn es sich um einen Last- oder Sattelzug handelt, zu Schäden, die meist keine in der Zugmaschine angeordneten sicherheitskritischen Aggregate, z. B. eine Antriebsvorrichtung, betreffen. Bei einer Front- oder seitlichen Kollision des Nutzfahrzeugs wäre die Wahrscheinlichkeit, dass sicherheitskritischen Aggregate betroffen sind, wesentlich höher.

Daher ist es bei Nutzfahrzeugen, anders als bei Personenkraftwagen, nicht möglich, eine ausreichende Erkennung einer Unfallsituation alleine anhand eines Airbag-Steuergeräts zu gewährleisten. Stattdessen muss die Erkennung auf anderem Wege durchgeführt werden.

Die DE 10 2011 118 149 A1 schlägt ein Verfahren zum Betreiben eines Sicherheitssystems eines Kraftfahrzeugs vor, wobei eine Klassifizierung einer momentanen Verkehrssituation des Kraftfahrzeugs basierend auf zumindest einem ermittelten, eine Verkehrssituation des Kraftfahrzeugs kennzeichnenden, Parameters erfolgt. Darüber hinaus erfolgt ein Ermitteln einer Wahrscheinlichkeit für ein Eintreten zumindest eines Unfalltyps aus einer Mehrzahl an vorbestimmten Unfalltypen. Falls die ermittelte Wahrscheinlichkeit einen vorbestimmten Schwellwert überschreitet, erfolgt ein Anpassen einer Auslöseschwelle für ein Betätigen zumindest einer Insassen-Schutzvorrichtung.

Der Erfindung liegt somit die Aufgabe zu Grunde, eine verbesserte Technik zur Erkennung einer Unfallsituation eines Nutzfahrzeugs bereitzustellen, welche die Nachteile bekannter Ansätze zumindest teilweise vermeidet. Insbesondere besteht die Aufgabe darin, ein Verfahren bereitzustellen, die eine Unfallsituation differenziert für verschiedene Unfallszenarien erkennen kann.

Die Aufgabe wird gelöst durch die Merkmale der unabhängigen Ansprüche. Vorteilhafte Weiterbildungen sind in den abhängigen Ansprüchen und der Beschreibung angegeben.

Gemäß einem ersten allgemeinen Aspekt der Erfindung wird ein Verfahren zur Erkennung einer Unfallsituation eines Nutzfahrzeugs, vorzugsweise eines Last- oder Sattelzugs, bereitgestellt. Die Unfallsituation ist mindestens einem von mehreren Unfallszenarien, die zumindest ein Umkippen und ein Schleudern des Nutzfahrzeugs umfassen, zuordenbar. Eine mögliche Unfallsituation ist in die mehreren Unfallszenarien kategorisierbar.

Das Verfahren umfasst ein Bereitstellen der mehreren Unfallszenarien, denen jeweils mindestens eine Mess- und/oder Zustandsgröße einer oder mehrerer Fahrzeugkomponenten und mindestens ein Kriterium zum Auswerten der mindestens einen Mess- und/oder Zustandsgröße zugeordnet sind. Anders ausgedrückt, werden mehrere vorbestimmte Kategorien bereitgestellt, wobei jede Kategorie Informationen zum Feststellen einer der mehreren Unfallszenarien aufweist. Die Informationen umfassen mindestens eine Mess- und/oder Zustandsgröße einer oder mehrerer Fahrzeugkomponenten und mindestens ein Kriterium zum Auswerten der mindestens einen Mess- und/oder Zustandsgröße. Das Bereitstellen kann umfassen, dass die mehreren Unfallszenarien z. B. in einem Speicher hinterlegt und abrufbar sind.

Das Verfahren umfasst ferner ein Überwachen und Auswerten der mindestens einen Mess- und/oder Zustandsgröße anhand des mindestens einen Kriteriums für jedes der mehreren Unfallszenarien. Anders angedrückt, wird jede der mehreren Unfallszenarien (Kategorien) überprüft, indem für jede der mehreren Unfallszenarien die zugeordnete mindestens eine Mess- und/oder Zustandsgröße überwacht (z. B. abgerufen und/oder empfangen) und anhand des zugeordneten mindestens einen Kriteriums ausgewertet wird. Das Überwachen und Auswerten kann für die mehreren Unfallszenarien gleichzeitig oder sequentiell erfolgen.

Das Verfahren umfasst ferner ein Feststellen, dass mindestens eines der mehreren Unfallszenarien vorliegt, wenn das mindestens eine Kriterium, das dem mindestens einen der mehreren Unfallszenarien zugeordnet ist, erfüllt ist. Das Verfahren umfasst ferner ein Erkennen einer Unfallsituation, wenn festgestellt wird, dass das mindestens eine der mehreren Unfallszenarien vorliegt.

Durch die vorliegende Offenbarung wird somit ein umfassendes Verfahren geschaffen, das in der Lage ist, eine Unfallsituation differenziert für verschiedene Unfallszenarien zu erkennen. Die Differenzierung erfolgt auf vorteilhafte Weise durch die Zuordnung vorbestimmter Mess- und/oder Zustandsgrößen sowie Kriterien zum Auswerten dieser Mess- und/oder Zustandsgröße für jedes der mehreren Unfallszenarien, was eine Erkennung einer Unfallsituation in Abhängigkeit von dem festgestellten Unfallszenario bzw. den festgestellten Unfallszenarien ermöglicht.

Ferner ist das Verfahren in der Lage, zwischen zumindest zwei Unfallszenarien, nämlich dem Umkippen und dem Schleudern des Nutzfahrzeugs, zu unterscheiden und diese festzustellen. Diese beiden Unfallszenarien sind besonders relevant für Nutzfahrzeuge. So kann das Schleudern zu schweren Unfällen führen bzw. ein Indiz für eine schwere bzw. sicherheitskritische Unfallsituation sein. So ist ein Abfangen eines schleudernden Nutzfahrzeugs, anders als bei einem Personenkraftwagen, oft nicht möglich und endet stattdessen in einer (u. U. weiteren) Kollision oder einem Umkippen des Nutzfahrzeugs, so dass Beschädigungen von sicherheitskritischen Aggregaten zu erwarten sind. Das Abfangen ist umso schwieriger, wenn es sich bei dem Nutzfahrzeug um einen Last- oder Sattelzug handelt und das Schleudern zusätzlich zu einem Einknicken der Zugkombination führt. Des Weiteren ist das Umkippen des Nutzfahrzeugs bei einer Unfallsituation aufgrund der Massenverteilung sowie der großen Masse des Nutzfahrzeugs wesentlich wahrscheinlicher oder zumindest kritischer als bei einem Personenkraftwagen. Diese beiden Unfallszenarien, das Umkippen und das Schleudern, sind entsprechend bei Unfallerkennungen für Personenkraftwagen weniger relevant. Stattdessen sind Kollisionserkennungen für Personenkraftwagen z. B. mithilfe der Airbag-Steuergeräte meist ausreichend.

Des Weiteren ist ein Feststellen des Umkippens oder des Schleuderns vorteilhafter ein Indiz für eine gefährliche Kollisionsintensität, wenn zusätzlich eine Kollision festgestellt wird. Bei einer Kollision an einem hinteren Teil des Nutzfahrzeugs, z. B. am Auflieger oder Anhänger, ist es u. U. nicht möglich, die Unfallsituation und seine Intensität (d. h. Schwere) alleine anhand eines in der Zugmaschine angeordneten Airbag-Steuergeräts festzustellen. Das bereitgestellte Verfahren bietet diese Möglichkeit, die Schwere einer Kollision auch bei Nutzfahrzeugen beurteilen zu können.

Gemäß einer Ausführungsform kann dem Umkippen (d.h. Umkippen bzw. Umstürzen des Nutzfahrzeugs zu einer Nutzfahrzeugseite hin) als Unfallszenario ein Zustand eines elektronisches Stabilitätsprogramms, ESP, und eine mittels des ESPs ermittelte Differenzdrehzahl zwischen zwei an einer Fahrzeugachse angeordneten Fahrzeugrädern des Nutzfahrzeugs als Mess- und/oder Zustandsgrößen zugeordnet sein. Alternativ kann die Differenzdrehzahl von einem anderen System der Fahrdynamikregelung als das ESP ermittelt werden, z. B. von einem Antiblockiersystem und/oder einer Antischlupfregelung des Nutzfahrzeugs. Ferner kann dem Umkippen als Unfallszenario eine mittels des ESPs ermittelte Querbeschleunigung des Nutzfahrzeugs als Mess- und/oder Zustandsgrößen zugeordnet sein. Das Umkippen kann auch als Umsturz des Nutzfahrzeugs bezeichnet sein.

Es kann festgestellt werden, dass das Umkippen als Unfallszenario vorliegt, wenn ein dem Umkippen als Unfallszenario zugeordnetes Kriterium erfüllt ist, dass der Zustand des ESPs angibt, dass das ESP, das vorzugsweise eine Überrollschutz-Funktion umfasst, in einen Fahrbetrieb des Nutzfahrzeugs eingreift und alle Räder des Nutzfahrzeugs abbremst (um eine Querbeschleunigung des Nutzfahrzeugs zu reduzieren), und die Differenzdrehzahl oberhalb eines Differenzdrehzahl-Grenzwertes liegt (d. h., die Differenzdrehzahl den Differenz-drehzahl-Grenzwert überschritten hat). Ein Überschreiten des Differenzdrehzahl-Grenzwertes gibt an, dass ein Umkippen unausweichlich ist. Das Überschreiten gibt ein Überschreiten physikalischer Grenzen des Nutzfahrzeugs an. Beispielsweise werden (z. B. in einer Kurvenfahrt kurveninnere) Räder des Nutzfahrzeugs bis zum Stillstand gebremst, während die (z. B. kurvenäußeren) Räder weiterlaufen. Aus diesen (plötzlich) auftretenden Differenzdrehzahlen, trotz des Eingreifens des ESPs, kann das Umkippen als Unfallszenario festgestellt werden. Ferner kann festgestellt werden, dass das Umkippen als Unfallszenario vorliegt, wenn ein dem Umkippen als Unfallszenario zusätzlich zugeordnetes Kriterium erfüllt ist, dass die Querbeschleunigung des Nutzfahrzeugs oberhalb eines ersten Querbeschleunigung-Grenzwertes liegt.

Das Feststellen des Umkippens als Unfallszenario berücksichtigt somit eine üblicherweise bereits im Nutzfahrzeug vorhandene Fahrzeugkomponente, nämlich das Fahrerassistenzsystem ESP, sodass ein Nachrüsten von weiterer Sensorik am Nutzfahrzeug nicht notwendig ist, um das Verfahren durchzuführen. Auch die zusätzliche Überrollschutz-Funktion (engl. "rollover prevention", ROP) des ESPs ist bereits für Nutzfahrzeuge bekannt. Bei dem Differenzdrehzahl-Grenzwert und dem ersten Querbeschleunigungs-Grenzwert handelt es sich um fahrzeugspezifische Werte, die z. B. anhand von Simulationen und/oder Versuchen vorbestimmt und z. B. im Nutzfahrzeug hinterlegt sein können.

Gemäß einer Ausführungsvariante können dem Schleudern als Unfallszenario ein Zustand des ESPs und ein mittels des ESPs gemessenes Giermoment des Nutzfahrzeugs als Mess- und/oder Zustandsgrößen zugeordnet sein. Ferner kann dem Schleudern als Unfallszenario die mittels des ESPs ermittelte Querbeschleunigung des Nutzfahrzeugs als Mess- und/oder Zustandsgrößen zugeordnet sein.

Es kann festgestellt werden, dass das Schleudern als Unfallszenario vorliegt, wenn ein dem Schleudern als Unfallszenario zugeordnetes Kriterium erfüllt ist, dass der Zustand des ESPs angibt, dass das ESP, das vorzugsweise eine Gierregelung umfasst, in einen Fahrbetrieb des Nutzfahrzeugs eingreift und selektiv Räder des Nutzfahrzeugs zum Kompensieren eines Über- oder Untersteuerns des Nutzfahrzeugs (durch ein entgegenwirkendes Giermoment) abbremst, und das Giermoment oberhalb eines Giermoment-Grenzwertes liegt (d. h. das Giermoment den Giermoment-Grenzwert überschritten hat). Ein Überschreiten des Giermoment-Grenzwertes gibt an, dass ein Schleudern unausweichlich ist. Das Überschreiten gibt ein Überschreiten physikalischer Grenzen des Nutzfahrzeugs an. Ist das Nutzfahrzeug ein Last- oder Sattelzug und umfasst somit eine Zugkombination (aus einer Zugmaschine mit einem Anhänger oder Auflieger), so kann mit dem Feststellen des Schleuderns gleichzeitig festgestellt werden, ob zusätzlich ein Einknicken der Zugkombination auftritt oder aufgetreten ist. Ferner kann festgestellt werden, dass das Schleudern als Unfallszenario vorliegt, wenn ein dem Schleudern als Unfallszenario zusätzlich zugeordnetes Kriterium erfüllt ist, dass die Querbeschleunigung des Nutzfahrzeugs oberhalb eines zweiten Querbeschleunigung-Grenzwertes liegt. Der zweite Querbeschleunigung-Grenzwert kann kleiner als der erste Querbeschleunigung-Grenzwert sein.

Das Feststellen des Schleuderns als Unfallszenario berücksichtigt somit ebenfalls das üblicherweise bereits im Nutzfahrzeug vorhandene ESP, sodass auch hierzu ein Nachrüsten von weiterer Sensorik am Nutzfahrzeug nicht notwendig ist, um das Verfahren durchzuführen. Auch die zusätzliche Gierregelung (engl. "yaw control", YC) des ESPs ist bereits für Nutzfahrzeuge bekannt. Bei dem Giermoment-Grenzwert und dem zweiten Querbeschleunigungs-Grenzwert handelt es sich um fahrzeugspezifische Werte, die z. B. anhand von Simulationen und/oder Versuchen vorbestimmt und z. B. im Nutzfahrzeug hinterlegt sein können.

Gemäß der Erfindung können die Unfallszenarien ferner eine Heckkollision (d. h. eine Kollision am Fahrzeugheck) des Nutzfahrzeugs umfassen. Der Heckkollision als Unfallszenario werden ein Zustand einer Heck-Beleuchtungseinrichtung, die z. B. eine oder mehrere Rückleuchten umfasst, und eine mittels eines Airbag-Steuergeräts erfasste Längsbeschleunigung des Nutzfahrzeugs als Mess- und/oder Zustandsgrößen zugeordnet. Die Längsbeschleunigung kann eine (zeitliche) Änderung und/oder eine Richtung der Längsbeschleunigung umfassen.

Es wird festgestellt, dass die Heckkollision als Unfallszenario vorliegt, wenn ein der Heckkollision als Unfallszenario zugeordnetes Kriterium erfüllt ist, dass der Zustand der Heck-Beleuchtungseinrichtung einen Defekt angibt und die Längsbeschleunigung oberhalb eines Längsbeschleunigungs-Grenzwertes liegt.

Das Feststellen der Heckkollision als Unfallszenario berücksichtigt somit ebenfalls üblicherweise bereits im Nutzfahrzeug vorhandene Fahrzeugkomponenten, nämlich das Airbag-Steuergerät und die Heck-Beleuchtungseinrichtung, sodass auch hierzu ein Nachrüsten von weiterer Sensorik am Nutzfahrzeug nicht notwendig ist, um das Verfahren durchzuführen. Dabei fällt dem Zustand der Heck-Beleuchtungseinrichtung ein besondere Bedeutung zu, da eine Feststellung der Heckkollision alleine auf Basis der Längsbeschleunigung mittels des Airbag-Steuergeräts nicht ohne weiteres möglich ist. Insbesondere bei einer Heckkollision am Auflieger oder Anhänger ist es u. U. nicht möglich, die Kollision alleine anhand eines in der Zugmaschine angeordneten Airbag-Steuergeräts festzustellen, sodass der Zustand der Heck-Beleuchtungseinrichtung als weiteres Kriterium herangezogen wird. Die Heck-Beleuchtungseinrichtung wird hier somit auf unübliche Weise als Sensorik verwendet.

Gemäß der Erfindung können die Unfallszenarien ferner eine seitliche Kollision umfassen. Der seitlichen Kollision als Unfallszenario können ein Zustand einer Seiten-Beleuchtungseinrichtung, z. B. Seitenmarkierungsleuchten, und der mittels des ESPs gemessene Querbeschleunigung des Nutzfahrzeugs als Mess- und/oder Zustandsgrößen zugeordnet sein.

Es wird festgestellt, dass die seitliche Kollision als Unfallszenario vorliegt, wenn ein der seitlichen Kollision als Unfallszenario zugeordnetes Kriterium erfüllt ist, dass der Zustand der Seiten-Beleuchtungseinrichtung einen Defekt angibt und die Querbeschleunigung oberhalb eines Querbeschleunigungs-Grenzwertes liegt. Ergänzend zur Seiten-Beleuchtungseinrichtung können auch eine andere seitlich am Nutzfahrzeug verbaute Komponente zum Feststellen der seitlichen Kollision herangezogen werden, wenn ein Zustand dieser verbauten Komponente einen Defekt angibt.

Das Feststellen der seitlichen Kollision als Unfallszenario berücksichtigt somit ebenfalls das üblicherweise bereits im Nutzfahrzeug vorhandene ESP, sodass auch hierzu ein Nachrüsten von weiterer Sensorik am Nutzfahrzeug nicht notwendig ist, um das Verfahren durchzuführen. Dabei fällt dem Zustand der Seiten-Beleuchtungseinrichtung, ähnlich wie der Heck-Beleuchtungseinrichtung für das Feststellen der Heckkollision, ein besondere Bedeutung zu, da eine Feststellung der seitlichen Kollision alleine aus Basis der Querbeschleunigung mittels des ESPs nicht ohne weiteres möglich ist. So kann eine Veränderung der Querbeschleunigung des Nutzfahrzeugs auch ohne Fremdeinwirkung auftreten, z. B. wenn das Nutzfahrzeug in einer Kurvenfahrt ins Schleudern gerät. Daher wird die Seiten-Beleuchtungseinrichtung hier auf unübliche Weise als Sensorik verwendet und deren Zustand als weiteres Kriterium herangezogen. Alternativ zum ESP wäre es auch vorstellbar, die Querbeschleunigung des Nutzfahrzeugs mittels einer eigenen Sensorik zu ermitteln. Bei dem Querbeschleunigungs-Grenzwert handelt es sich um ein fahrzeugspezifischen Wert, der z. B. anhand von Simulationen und/oder Versuchen vorbestimmt und z. B. im Nutzfahrzeug hinterlegt sein kann.

Gemäß einer weiteren Ausführungsvariante kann der seitlichen Kollision als Unfallszenario ferner ein Zustand elektrischer Leitungen, die in und/oder an einem oder mehreren Seitenverkleidungsteilen des Nutzfahrzeugs, angeordnet sind, als eine der Mess- und/oder Zustandsgrößen zugeordnet sein. Ist das Nutzfahrzeug ein Last- oder Sattelzug, so können die elektrischer Leitungen vorzugsweise in und/oder an einem oder mehreren Seitenverkleidungsteilen eines Anhängers des Lastzugs oder eines Aufliegers des Sattelzugs angeordnet sein.

Es kann festgestellt werden, dass die seitliche Kollision als Unfallszenario vorliegt, wenn ein der seitlichen Kollision als Unfallszenario zugeordnetes Kriterium erfüllt ist, dass der Zustand der elektrischen Leitungen eine Durchtrennung einer oder mehrerer der elektrischen Leitungen angibt.

Somit kann auch eine eigens für das Feststellen der seitlichen Kollision vorgesehene Sensorik vorgesehen sein, um die seitliche Kollision als Unfallszenario mit verbesserter Genauigkeit feststellen zu können. Dies ist insbesondere an Positionen, z. B. seitlich entlang des Aufliegers bzw. Anhängers, von Vorteil, an denen keine Seiten-Beleuchtungseinrichtung oder andere Komponenten seitlich am Nutzfahrzeug angebracht sind und ein Feststellen der seitlichen Kollision alleine anhand eines in der Zugmaschine angeordneten Airbag-Steuergeräts u. U. nicht möglich ist.

Ferner kann dem Umkippen als Unfallszenario der Zustand der elektrischen Leitungen als eine der Mess- und/oder Zustandsgrößen zugeordnet sein. Es kann festgestellt werden, dass das Umkippen als Unfallszenario vorliegt, wenn ein zusätzliches der seitlichen Kollision als Unfallszenario zugeordnetes Kriterium erfüllt ist, dass der Zustand der elektrischen Leitungen eine Durchtrennung einer oder mehrerer der elektrischen Leitungen angibt.

Gemäß einer Ausführungsvariante können die Unfallszenarien ferner eine Frontkollision (d. h. eine Kollision an der Fahrzeugfront) umfassen. Der Frontkollision als Unfallszenario können ein Zustand eines Airbag-Steuergeräts und ein Zustand eines Notbremsassistenzsystems, als Mess- und/oder Zustandsgrößen zugeordnet sein.

Es kann festgestellt werden, dass die Frontkollision als Unfallszenario vorliegt, wenn ein der Frontkollision als Unfallszenario zugeordnetes Kriterium erfüllt ist, dass der Zustand des Airbag-Steuergeräts ein Zünden eines Airbags angibt und der Zustand des Notbremsassistenzsystems angibt, dass eine Kollision unvermeidbar ist.

Das Feststellen der Frontkollision als Unfallszenario berücksichtigt somit ebenfalls üblicherweise bereits im Nutzfahrzeug vorhandene Fahrzeugkomponenten, nämlich das Notbremsassistenzsystem und das Airbag-Steuergerät, sodass auch hierzu ein Nachrüsten von weiterer Sensorik am Nutzfahrzeug, um das Verfahren durchzuführen, nicht notwendig ist.

Gemäß einer Ausführungsform kann der Frontkollision als Unfallszenario ferner eine mittels des Notbremsassistenzsystems erfasste Restgeschwindigkeit des Nutzfahrzeugs im Kollisionsfall als eine der Mess- und/oder Zustandsgrößen zugeordnet sein. Die Restgeschwindigkeit kann eine (Längs-)Geschwindigkeit des Nutzfahrzeugs zum Kollisionszeitpunkt sein. Es kann festgestellt werden, dass die Frontkollision als Unfallszenario vorliegt, wenn ein der Frontkollision als Unfallszenario zugeordnetes Kriterium erfüllt ist, dass die Restgeschwindigkeit oberhalb eines Restgeschwindigkeits-Grenzwertes liegt.

Gemäß einer weiteren bevorzugten Ausführungsform kann das Verfahren ferner ein Einstufen der erkannten Unfallsituation als sicherheitskritische Unfallsituation umfassen. Das Verfahren kann ferner ein Durchführen einer Sicherheitsmaßnahme des Nutzfahrzeugs, wenn die erkannte Unfallsituation als sicherheitskritische Unfallsituation eingestuft wird, umfassen. Somit kann das Verfahren nicht nur eine Unfallsituation erkennen, sondern ferner auf vorteilhafte Weise die Schwere der Unfallsituation beurteilen und gegebenenfalls entsprechende Fahrzeugreaktionen des Nutzfahrzeugs auslösen.

Gemäß einer weiteren Ausführungsform kann die erkannte Unfallsituation als sicherheitskritische Unfallsituation eingestuft werden, wenn festgestellt wird, dass die Heckkollision als Unfallszenario wie hierin offenbart und das Schleudern als Unfallszenario wie hierin offenbart vorliegt. Alternativ oder ergänzend kann die erkannte Unfallsituation als sicherheitskritische Unfallsituation eingestuft werden, wenn festgestellt wird, dass die seitliche Kollision als Unfallszenario wie hierin offenbart und das Schleudern als Unfallszenario wie hierin offenbart vorliegt. Ferner alternativ oder ergänzend kann die erkannte Unfallsituation als sicherheitskritische Unfallsituation eingestuft werden, wenn festgestellt wird, dass das Umkippen als Unfallszenario wie hierin offenbart vorliegt. Ferner alternativ oder ergänzend kann die erkannte Unfallsituation als sicherheitskritische Unfallsituation eingestuft werden, wenn festgestellt wird, dass die Frontkollision als Unfallszenario wie hierin offenbart vorliegt und die Restgeschwindigkeit oberhalb des Restgeschwindigkeits-Grenzwertes liegt.

Somit kann das Verfahren die Schwere der Unfallsituation beurteilen und gegebenenfalls notwendigen Fahrzeugreaktionen des Nutzfahrzeugs auslösen, wobei insbesondere der Möglichkeit, Schleudern als Unfallszenario feststellen zu können, besonders vorteilhafte Bedeutung zukommt. Bei einem Nutzfahrzeug, insbesondere einem Last- oder Sattelzug, führt eine leichte seitliche Kollision oder Heckkollision, z. B. ein Auffahrunfall, nur zu leichten Beschädigungen. Insbesondere eine leichte Kollision am Anhänger oder Auflieger führt nicht zu Beschädigungen des Zugfahrzeugs und insofern auch nicht zu Beschädigungen von sicherheitskritischen Aggregaten. Eine schwere seitliche Kollision oder Heckkollision, insbesondere bei höheren Fahrgeschwindigkeiten des Nutzfahrzeugs, führt dagegen, neben schweren Schäden z. B. am Anhänger oder Auflieger auch zu einer Beeinträchtigung der Stabilität des gesamten Nutzfahrzeugs, was zum Schleudern und gegebenenfalls Einknicken der Zugkombination führen kann. Dies führt meist zu einer weiteren Kollision oder einem Umkippen des Nutzfahrzeugs. Eine schwere seitliche Kollision oder Heckkollision kann somit zu einer Beschädigung oder zumindest einer hohen Gefährdung sicherheitskritischer Aggregaten führen. Im Falle der Frontkollision dient der vorbestimmte Restgeschwindigkeits-Grenzwert dazu, eine schwere Kollision festzustellen zu können, bei der sicherheitskritische Aggregaten gefährdet sein können.

Gemäß einer weiteren Ausführungsvariante kann das Nutzfahrzeug ein zumindest teilweise elektrisch antreibbares Nutzfahrzeug sein, und das Durchführen einer Sicherheitsmaßnahme ein Abschalten eines Hochvoltnetzes und/oder einer Wasserstoffversorgung des Nutzfahrzeugs umfassen. Somit werden durch das Verfahren auf vorteilhafte Weise sicherheitskritische Aggregate abgeschaltet, um so Gefahren für das Nutzfahrzeug, die Insassen und weitere Beteiligte bei einer sicherheitskritischen Unfallsituation zu vermeiden.

Gemäß einem weiteren allgemeinen Aspekt der Erfindung wird eine Steuereinheit zur Erkennung einer Unfallsituation eines Nutzfahrzeugs, vorzugsweise eines Last- oder Sattelzugs, das zur Ausführung des Verfahrens wie hierin offenbart ausgebildet ist, bereitgestellt. Die Steuereinheit kann eine Elektronik sein, die nicht nur Steuerungsaufgaben, sondern z. B. auch Überwachungs-, Auswerte- und/oder Regelungsaufgaben übernehmen kann. Die Steuereinheit kann auch als Überwachungs- und/oder Auswerteeinheit verstanden werden.

Zur Vermeidung von Wiederholungen sollen zuvor rein verfahrensgemäß offenbarte Merkmale auch als vorrichtungsgemäß für die Steuereinheit offenbart gelten und beanspruchbar sein.

Gemäß einem weiteren allgemeinen Aspekt der Erfindung wird ein Nutzfahrzeug, vorzugsweise Last- oder Sattelzug, umfassend eine Steuereinheit wie hierin offenbart, bereitgestellt.

Gemäß einer Ausführungsform kann das Nutzfahrzeug ferner mindestens eine der folgenden Fahrzeugkomponenten, die signaltechnisch mit der Steuereinheit verbunden sind, umfassen:
- ein elektronisches Stabilitätsprogramm, ESP, das vorzugsweise eine Überrollschutz-Funktion und/oder eine Gierregelung umfasst,
- ein Notbremsassistenzsystem,
- ein Airbag-Steuergerät,
- eine Heck-Beleuchtungseinrichtung,
- eine Seiten-Beleuchtungseinrichtung, und
- elektrische Leitungen, mit denen ein oder mehrere Seitenverkleidungsteile des Nutzfahrzeugs versehen sind.

Das Nutzfahrzeug kann ferner einen Speicher umfassen, in dem die (vorbestimmten) mehreren Unfallszenarien, denen jeweils mindestens eine Mess- und/oder Zustandsgröße einer oder mehrerer Fahrzeugkomponenten und mindestens ein Kriterium zum Auswerten der mindestens einen Mess- und/oder Zustandsgröße zugeordnet sind, bereitgestellt (d. h. für die Steuereinheit zur Ausführung des Verfahrens wie hierin offenbart bereitgestellt, hinterlegt) sind. Die jeweils zugeordnete mindestens eine Mess- und/oder Zustandsgröße einer oder mehrerer Fahrzeugkomponenten und das zugeordnete mindestens ein Kriterium zum Auswerten der mindestens einen Mess- und/oder Zustandsgröße, sind zweckmäßig im Speicher bereitgestellt. Der Speicher kann Teil der Steuereinheit sein oder signaltechnisch mit der Steuereinheit verbunden sein.

Weitere Einzelheiten und Vorteile der Erfindung werden im Folgenden unter Bezug auf die beigefügten Zeichnungen beschrieben. Es zeigen:
- Figur 1: eine schematische Ansicht eines Nutzfahrzeugs mit einer Steuereinheit gemäß einer Ausführungsform;
- Figur 2: ein Ablauf eines Verfahrens gemäß einer Ausführungsform; und
- Figur 3: eine beispielhafte Übersicht der möglichen Unfallszenarien.

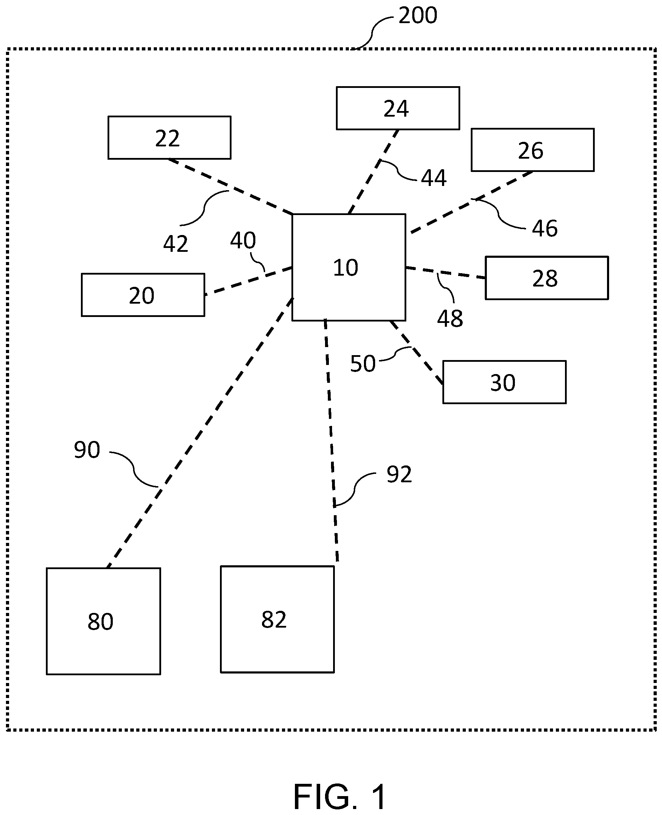

Figur 1 zeigt eine Steuereinheit 10, die zur Ausführung eines Verfahrens 100 zur Erkennung einer Unfallsituation eines Nutzfahrzeugs 200, vorzugsweise eines Last- oder Sattelzugs, ausgebildet ist. Dazu ist die Signaleinheit 10 im Nutzfahrzeug mit Fahrzeugkomponenten signaltechnisch verbunden, um Zustand- und/oder Messgrößen dieser Fahrzeugkomponenten zu überwachen und zur Erkennung einer Unfallsituation auszuwerten.

Die Steuereinheit 10 kann insbesondere mit Fahrerassistenzsystemen signaltechnisch verbunden sein, z. B. über eine Signalverbindung 40 mit einem elektronischen Stabilitätsprogramm 20, ESP, das vorzugsweise eine Überrollschutz-Funktion und/oder eine Gierregelung umfasst, und über eine Signalverbindung 42 mit einem Notbremsassistenzsystem 22.

Die Steuereinheit 10 kann ferner mit weiteren, üblicherweise bereits im Nutzfahrzeug 200 vorhandenen Fahrzeugkomponenten signaltechnisch verbunden sein, z. B. über eine Signalverbindung 44 mit einem Airbag-Steuergerät 24, über eine Signalverbindung 46 mit einer Heck-Beleuchtungseinrichtung 26, und über eine Signalverbindung 48 mit einer Seiten-Beleuchtungseinrichtung 28.

Zudem können auch eigens zur Erkennung einer Unfallsituation vorgesehene Fahrzeugkomponenten berücksichtigt werden. Beispielsweise können ein oder mehrere Seitenverkleidungsteile des Nutzfahrzeugs 200 mit elektrischen Leitungen 30 versehen sein, wobei z. B. eine Steuereinrichtung der elektrischen Leitungen 30 über eine Signalverbindung 50 mit der Steuereinheit zählen signaltechnisch verbunden ist.

Des Weiteren kann die Steuereinheit 10 auch ausgebildet sein, eine Sicherheitsmaßnahme des Nutzfahrzeugs 200 durchzuführen, wenn eine Unfallsituation erkannt und ferner als sicherheitskritische Unfallsituation eingestuft worden ist. Bei einem elektrisch antreibbaren Nutzfahrzeug 200 kann die Steuereinheit z. B. über eine Signalverbindung 90 mit einem Hochvoltnetz 80 und über eine Signalverbindung 92 mit einer Wasserstoffversorgung 82 signaltechnisch verbunden sein, um z. B. bei einer sicherheitskritischen Unfallsituation ein Abschalten dieser beiden Fahrzeugkomponenten zu veranlassen.

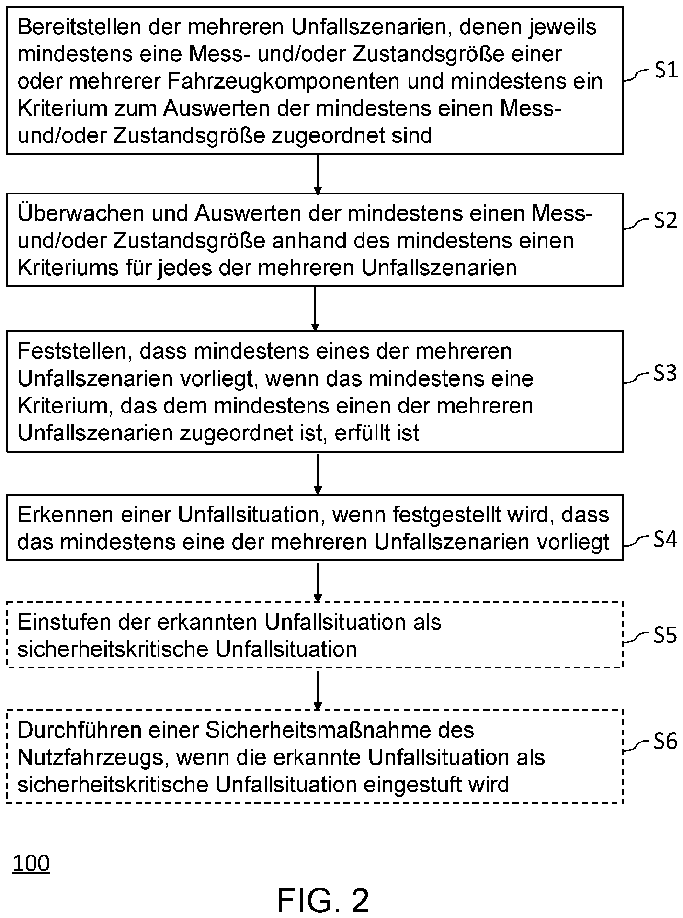

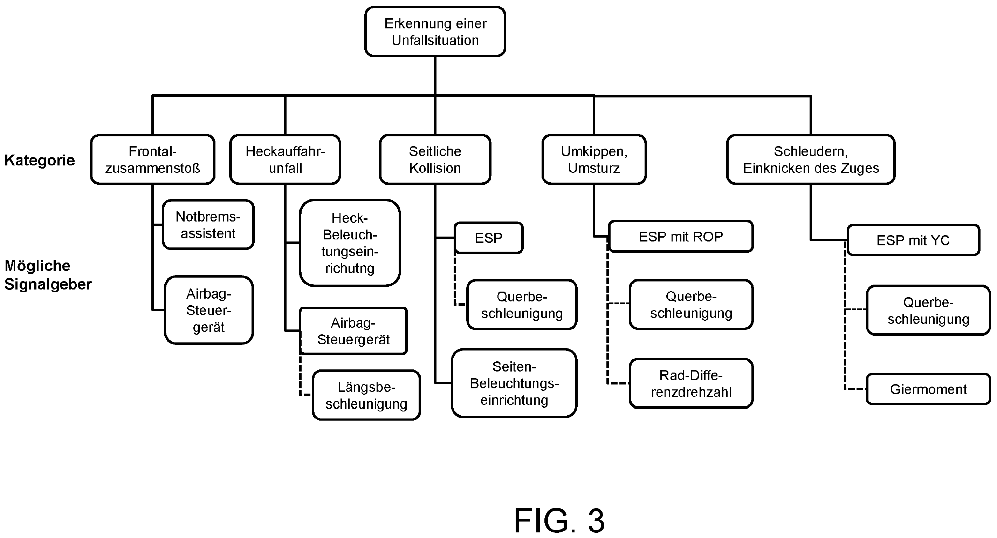

Figur 2 zeigt einen Ablauf des Verfahrens 100 zur Erkennung einer Unfallsituation des Nutzfahrzeugs 200, wobei die Unfallsituation mindestens einem von mehreren Unfallszenarien, die zumindest ein Umkippen und ein Schleudern des Nutzfahrzeugs 200 umfassen, zuordenbar ist. Figur 3 zeigt eine beispielhafte Übersicht der möglichen Unfallszenarien, anhand denen eine Unfallsituation erkannt werden kann.

In Schritt S1 werden die mehreren Unfallszenarien bereitgestellt. Den Unfallszenarien sind jeweils mindestens eine Mess- und/oder Zustandsgröße einer oder mehrerer Fahrzeugkomponenten und mindestens ein Kriterium zum Auswerten der mindestens einen Mess- und/oder Zustandsgröße zugeordnet.

Die vorliegende Offenbarung sieht ein Bereitstellen von bis zu fünf Unfallszenarien vor, die in Figur 3 dargestellt sind. Dies schließt jedoch keine weitere Differenzierung bzw. ein Bereitstellen weiterer Unfallszenarien aus.

In Figur 3 zeigt die Kategorisierung einer möglichen Unfallsituation in die fünf Unfallszenarien, die auch als Kategorien bezeichnet werden können. Jeder dieser Unfallszenarien sind Mess- und/oder Zustandsgrößen zugeordnet, welche durch die ebenfalls angegebenen Fahrzeugkomponenten erfasst werden. Die Fahrzeugkomponenten können entsprechend auch als Signalgeber für das Verfahren 100 bezeichnet werden.

Die Unfallszenarien des Verfahrens 100 umfassen zumindest ein Umkippen (Umsturz) und ein Schleudern des Nutzfahrzeugs 200, welche rechts in der Übersicht der Figur 3 gezeigt sind. Handelt es sich bei dem Nutzfahrzeug 200 um ein Last- oder Sattelzug, so kann mit dem Schleudern des Nutzfahrzeug 200 gleichzeitig festgestellt werden, ob zusätzlich ein Einknicken der Zugkombination auftritt oder aufgetreten ist.

Dem Umkippen als Unfallszenario kann ein Zustand des ESPs 20 und einer mittels des ESPs 20 ermittelte Differenzdrehzahl zwischen zwei an einer Fahrzeugachse angeordneten Fahrzeugrädern als Mess- und/oder Zustandsgrößen zugeordnet sein. Das ESP 20 kann vorzugsweise eine Überrollschutz-Funktion (engl. "rollover prevention", ROP) umfassen. Zusätzlich kann auch eine mittels des ESPs 20 ermittelte Querbeschleunigung des Nutzfahrzeugs 200 berücksichtigt werden.

Dem Schleudern als Unfallszenario kann ein Zustand des ESPs 20 und ein mittels des ESPs 20 gemessenes Giermoment des Nutzfahrzeugs 200 als Mess- und/oder Zustandsgrößen zugeordnet sein. Das ESP 20 kann vorzugsweise eine Gierregelung (engl. "yaw control", YC) umfassen. Zusätzlich kann auch hier eine mittels des ESPs 20 ermittelte Querbeschleunigung des Nutzfahrzeugs 200 berücksichtigt werden.

Die Unfallszenarien können ferner eine von Frontkollision (Frontalzusammenstoß), eine Hecckollision (Heckauffahrunfall) und eine seitliche Kollision des Nutzfahrzeugs 200 umfassen.

Der Frontkollision als Unfallszenario kann ein Zustand des Airbag-Steuergeräts 24 und ein Zustand des Notbremsassistenzsystems 22 als Mess- und/oder Zustandsgrößen zugeordnet sein. Zusätzlich kann der Frontkollision als Unfallszenario eine mittels des Notbremsassistenzsystems 22 erfasste Restgeschwindigkeit des Nutzfahrzeugs 200 im Kollisionsfall als eine der Mess- und/oder Zustandsgrößen zugeordnet sein.

Der Heckkollision als Unfallszenario kann ein Zustand einer Heck-Beleuchtungseinrichtung 26 und eine mittels eines Airbag-Steuergeräts 24 erfasste Längsbeschleunigung des Nutzfahrzeugs 200 als Mess- und/oder Zustandsgrößen zugeordnet sein.

Der seitlichen Kollision als Unfallszenario kann ein Zustand der Seiten-Beleuchtungseinrichtung 28, und eine mittels des ESPs gemessene Querbeschleunigung des Nutzfahrzeugs 200 als Mess- und/oder Zustandsgrößen zugeordnet sein. Zusätzlich kann der seitlichen Kollision als Unfallszenario ein Zustand der elektrischen Leitungen 30 als eine der Mess- und/oder Zustandsgrößen zugeordnet sein.

In Schritt S2 wird die mindestens eine Mess- und/oder Zustandsgröße anhand des mindestens einen Kriteriums für jedes der mehreren Unfallszenarien überwacht und ausgewertet. Dazu können sämtliche den Unfallszenarien zugeordneten Mess- und/oder Zustandsgrößen z. B. gleichzeitig überwacht werden. Vorstellbar ist auch eine sequenzielle Überwachung, wobei z. B. jedes Unfallszenario bzw. die mindestens eine dem jeweiligen Unfallszenario zugeordnete Mess- und/oder Zustandsgröße nacheinander abgerufen und überwacht wird.

In Schritt S3 wird festgestellt, dass mindestens eines der mehreren Unfallszenarien vorliegt, wenn das mindestens eine Kriterium, das dem mindestens einen der mehreren Unfallszenarien zugeordnet ist, erfüllt ist.

So kann festgestellt werden, dass das Umkippen als Unfallszenario vorliegt, wenn ein dem Umkippen als Unfallszenario zugeordnetes Kriterium erfüllt ist, dass der Zustand des ESPs 20 angibt, dass das ESP 20 in einen Fahrbetrieb des Nutzfahrzeugs 200 eingreift und alle Räder des Nutzfahrzeugs 200 abbremst, und die Differenzdrehzahl oberhalb eines Differenzdrehzahl-Grenzwertes liegt.

Ferner kann festgestellt werden, dass das Schleudern als Unfallszenario vorliegt, wenn ein dem Schleudern als Unfallszenario zugeordnetes Kriterium erfüllt ist, dass der Zustand des ESPs 20 angibt, dass das ESP 20 in einen Fahrbetrieb des Nutzfahrzeugs 200 eingreift und selektiv Räder des Nutzfahrzeugs 200 zum Kompensieren eines Über- oder Untersteuerns des Nutzfahrzeugs 200 abbremst, und das Giermoment oberhalb eines Giermoment-Grenzwertes liegt bzw. nicht unter einen Giermoment-Grenzwert fällt.

Es kann festgestellt werden, dass die Frontkollision als Unfallszenario vorliegt, wenn ein der Frontkollision als Unfallszenario zugeordnetes Kriterium erfüllt ist, dass der Zustand des Airbag-Steuergeräts 24 angibt, dass ein Airbag gezündet wurde oder wird, und der Zustand des Notbremsassistenzsystems 22 angibt, dass eine Kollision unvermeidbar ist. Liegt zusätzlich die Restgeschwindigkeit des Nutzfahrzeugs 200 im Kollisionsfall als eine der Mess- und/oder Zustandsgrößen vor, so kann festgestellt werden, dass die Frontkollision als Unfallszenario vorliegt, wenn ein der Frontkollision als Unfallszenario zugeordnetes Kriterium erfüllt ist, dass die Restgeschwindigkeit oberhalb eines Restgeschwindigkeits-Grenzwertes liegt.

Es kann festgestellt werden, dass die Heckkollision als Unfallszenario vorliegt, wenn ein der Heckkollision als Unfallszenario zugeordnetes Kriterium erfüllt ist, dass der Zustand der Heck-Beleuchtungseinrichtung 26 einen Defekt angibt und die Längsbeschleunigung oberhalb eines Längsbeschleunigungs-Grenzwertes liegt.

Ferner kann festgestellt werden, dass die seitliche Kollision als Unfallszenario vorliegt, wenn ein der seitlichen Kollision als Unfallszenario zugeordnetes Kriterium erfüllt ist, dass der Zustand der Seiten-Beleuchtungseinrichtung 28 einen Defekt angibt, und die Querbeschleunigung oberhalb eines Querbeschleunigungs-Grenzwertes liegt. Liegt zusätzlich der Zustand der elektrischen Leitungen 30 als eine der Mess- und/oder Zustandsgrößen zugeordnet vor, so kann festgestellt werden, dass die seitliche Kollision als Unfallszenario vorliegt, wenn ein der seitlichen Kollision als Unfallszenario zugeordnetes Kriterium erfüllt ist, dass der Zustand der elektrischen Leitungen 30 eine Durchtrennung einer oder mehrerer der elektrischen Leitungen 30 angibt.

In Schritt S4 wird eine Unfallsituation erkannt, wenn festgestellt wird, dass das mindestens eine der mehreren Unfallszenarien vorliegt. So können auch mehrere Unfallszenarien gleichzeitig vorliegen. Beispielsweise kann ein Schleudern des Nutzfahrzeugs durch eine seitliche Kollision hervorgerufen werden, sodass das Verfahren 100 feststellen kann, dass das Schleudern und die seitliche Kollision als Unfallszenarien vorliegen.

Optional kann das Verfahren 100 ferner die Schritte S5 und S6 umfassen.

In Schritt S5 wird die erkannte Unfallsituation als sicherheitskritische Unfallsituation eingestuft. So kann die erkannte Unfallsituation als sicherheitskritische Unfallsituation eingestuft werden, wenn festgestellt wird, dass z. B. das Schleudern als Unfallszenario und zugleich die Heckkollision und/oder die seitliche Kollision als Unfallszenario vorliegt. Ferner kann eine sicherheitskritische Unfallsituation im Falle des Umkippens als Unfallszenario oder der Frontkollision als Unfallszenario, wenn die Restgeschwindigkeit oberhalb des Restgeschwindigkeits-Grenzwertes liegt, vorliegen.

In Schritt S6 wird eine Sicherheitsmaßnahme des Nutzfahrzeugs 200 durchgeführt, wenn die erkannte Unfallsituation als sicherheitskritische Unfallsituation eingestuft wird.

Handelt es sich bei dem Nutzfahrzeug 200 z. B. um ein elektrisch antreibbares Nutzfahrzeug, so kann das Durchführen einer Sicherheitsmaßnahme ein Abschalten des Hochvoltnetzes 80 und/oder der Wasserstoffversorgung 82 des Nutzfahrzeugs 200 umfassen.

### Bezugszeichenliste

- 10: Steuereinheit
- 20: Elektronisches Stabilitätsprogramm
- 22: Notbremsassistenzsystem
- 24: Airbag-Steuergerät
- 26: Heck-Beleuchtungseinrichtung
- 28: Seiten-Beleuchtungseinrichtung
- 30: Elektrische Leitungen
- 40,..., 50, 90, 92: Signalverbindung
- 80: Hochvoltnetz
- 82: Wasserstoffversorgung
- 100: Verfahren
- 200: Nutzfahrzeug
- S1,..., S6: Verfahrensschritt

## Patentansprüche

1. Verfahren (100) zur Erkennung einer Unfallsituation eines Nutzfahrzeugs (200), vorzugsweise eines Last- oder Sattelzugs, wobei die Unfallsituation mindestens einem von mehreren Unfallszenarien, die zumindest ein Umkippen und ein Schleudern des Nutzfahrzeugs (200) umfassen, zuordenbar ist, das Verfahren (100) umfassend die Schritte:
Bereitstellen (S1) der mehreren Unfallszenarien, denen jeweils mindestens eine Mess- und/oder Zustandsgröße einer oder mehrerer Fahrzeugkomponenten und mindestens ein Kriterium zum Auswerten der mindestens einen Mess- und/oder Zustandsgröße zugeordnet sind;
Überwachen und Auswerten (S2) der mindestens einen Mess- und/oder Zustandsgröße anhand des mindestens einen Kriteriums für jedes der mehreren Unfallszenarien;
Feststellen (S3), dass mindestens eines der mehreren Unfallszenarien vorliegt, wenn das mindestens eine Kriterium, das dem mindestens einen der mehreren Unfallszenarien zugeordnet ist, erfüllt ist; und
Erkennen (S4) einer Unfallsituation, wenn festgestellt wird, dass das mindestens eine der mehreren Unfallszenarien vorliegt;
**wobei,** die Unfallszenarien ferner
a) eine Heckkollision des Nutzfahrzeugs (200) umfassen, und wobei
a1) der Heckkollision als Unfallszenario ein Zustand einer Heck-Beleuchtungseinrichtung (26) und eine mittels eines Airbag-Steuergeräts (24) erfasste Längsbeschleunigung des Nutzfahrzeugs (200) als Mess- und/oder Zustandsgrößen zugeordnet sind, und
a2) festgestellt wird, dass die Heckkollision als Unfallszenario vorliegt, wenn ein der Heckkollision als Unfallszenario zugeordnetes Kriterium erfüllt ist, dass der Zustand der Heck-Beleuchtungseinrichtung (26) einen Defekt angibt und die Längsbeschleunigung oberhalb eines Längsbeschleunigungs-Grenzwertes liegt; und/oder
b) eine seitliche Kollision umfassen, und wobei
b1) der seitlichen Kollision als Unfallszenario ein Zustand einer Seiten-Beleuchtungseinrichtung (28), und eine mittels eines elektronisches Stabilitätsprogramms (20), ESP, gemessene Querbeschleunigung des Nutzfahrzeugs (200) als Mess- und/oder Zustandsgrößen zugeordnet sind; und
b2) festgestellt wird, dass die seitliche Kollision als Unfallszenario vorliegt, wenn ein der seitlichen Kollision als Unfallszenario zugeordnetes Kriterium erfüllt ist, dass der Zustand der Seiten-Beleuchtungseinrichtung (28) einen Defekt angibt und die Querbeschleunigung oberhalb eines Querbeschleunigungs-Grenzwertes liegt.

2. Verfahren (100) nach Anspruch 1, wobei dem Umkippen als Unfallszenario ein Zustand eines elektronisches Stabilitätsprogramms (20), ESP, und eine mittels des ESPs (20) ermittelte Differenzdrehzahl zwischen zwei an einer Fahrzeugachse angeordneten Fahrzeugrädern des Nutzfahrzeugs (200) als Mess- und/oder Zustandsgrößen zugeordnet sind.

3. Verfahren (100) nach Anspruch 2, wobei festgestellt wird, dass das Umkippen als Unfallszenario vorliegt, wenn ein dem Umkippen als Unfallszenario zugeordnetes Kriterium erfüllt ist, dass der Zustand des ESPs (20) angibt, dass das ESP (20), das vorzugsweise eine Überrollschutz-Funktion umfasst, in einen Fahrbetrieb des Nutzfahrzeugs (200) eingreift und alle Räder des Nutzfahrzeugs (200) abbremst, und die Differenzdrehzahl oberhalb eines Differenzdrehzahl-Grenzwertes liegt.

4. Verfahren (100) nach einem der vorhergehenden Ansprüche, wobei dem Schleudern als Unfallszenario ein Zustand eines elektronisches Stabilitätsprogramms (20), ESP, und ein mittels des ESPs (20) gemessenes Giermoment des Nutzfahrzeugs (200) als Mess- und/oder Zustandsgrößen zugeordnet sind.

5. Verfahren (100) nach Anspruch 4, wobei festgestellt wird, dass das Schleudern als Unfallszenario vorliegt, wenn ein dem Schleudern als Unfallszenario zugeordnetes Kriterium erfüllt ist, dass der Zustand des ESPs (20) angibt, dass das ESP (20), das vorzugsweise eine Gierregelung umfasst, in einen Fahrbetrieb des Nutzfahrzeugs (200) eingreift und selektiv Räder des Nutzfahrzeugs (200) zum Kompensieren eines Über- oder Untersteuerns des Nutzfahrzeugs (200) abbremst, und das Giermoment oberhalb eines Giermoment-Grenzwertes liegt.

6. Verfahren (100) nach einem der vorhergehenden Ansprüche gemäß der Variante b) von Anspruch 1, wobei
a) der seitlichen Kollision als Unfallszenario ferner ein Zustand elektrischer Leitungen (30), die in und/oder an einem oder mehreren Seitenverkleidungsteilen des Nutzfahrzeugs (200) angeordnet sind, als eine der Mess- und/oder Zustandsgrößen zugeordnet ist, und
b) festgestellt wird, dass die seitliche Kollision als Unfallszenario vorliegt, wenn ein der seitlichen Kollision als Unfallszenario zugeordnetes Kriterium erfüllt ist, dass der Zustand der elektrischen Leitungen (30) eine Durchtrennung einer oder mehrerer der elektrischen Leitungen (30) angibt.

7. Verfahren (100) nach einem der vorhergehenden Ansprüche, wobei die Unfallszenarien ferner eine Frontkollision umfassen, und wobei
a) der Frontkollision als Unfallszenario ein Zustand eines Airbag-Steuergeräts (24) und ein Zustand eines Notbremsassistenzsystems (22), als Mess- und/oder Zustandsgrößen zugeordnet sind, und
b) festgestellt wird, dass die Frontkollision als Unfallszenario vorliegt, wenn ein der Frontkollision als Unfallszenario zugeordnetes Kriterium erfüllt ist, dass der Zustand des Airbag-Steuergeräts (24) ein Zünden eines Airbags angibt und der Zustand des Notbremsassistenzsystems (22) angibt, dass eine Kollision unvermeidbar ist.

8. Verfahren (100) nach Anspruch 7, wobei
a) der Frontkollision als Unfallszenario ferner eine mittels des Notbremsassistenzsystems (22) erfasste Restgeschwindigkeit des Nutzfahrzeugs (200) im Kollisionsfall als eine der Mess- und/oder Zustandsgrößen zugeordnet ist, und
b) festgestellt wird, dass die Frontkollision als Unfallszenario vorliegt, wenn ein der Frontkollision als Unfallszenario zugeordnetes Kriterium erfüllt ist, dass die Restgeschwindigkeit oberhalb eines Restgeschwindigkeits-Grenzwertes liegt.

9. Verfahren (100) nach einem der vorhergehenden Ansprüche, wobei das Verfahren (100) ferner umfasst:
Einstufen (S5) der erkannten Unfallsituation als sicherheitskritische Unfallsituation, und
Durchführen (S6) einer Sicherheitsmaßnahme des Nutzfahrzeugs (200), wenn die erkannte Unfallsituation als sicherheitskritische Unfallsituation eingestuft wird.

10. Verfahren (100) nach Anspruch 7, wobei die erkannte Unfallsituation als sicherheitskritische Unfallsituation eingestuft wird, wenn festgestellt wird, dass
a) die Heckkollision als Unfallszenario nach der Variante a) von Anspruch 1 und das Schleudern als Unfallszenario nach Anspruch 5 vorliegt, und/oder
b) die seitliche Kollision als Unfallszenario nach der Variante b) von Anspruch 1 oder nach Anspruch 6 und das Schleudern als Unfallszenario nach Anspruch 5 vorliegt, und/oder
c) das Umkippen als Unfallszenario nach Anspruch 3 vorliegt, und/oder
d) die Frontkollision als Unfallszenario nach Anspruch 8 vorliegt.

11. Verfahren (100) nach Anspruch 9 oder 10, wobei das Nutzfahrzeug (200) ein elektrisch antreibbares Nutzfahrzeug ist, und das Durchführen einer Sicherheitsmaßnahme ein Abschalten eines Hochvoltnetzes (80) und/oder einer Wasserstoffversorgung (82) des Nutzfahrzeugs (200) umfasst.

12. Steuereinheit (10) zur Erkennung einer Unfallsituation eines Nutzfahrzeugs (200), vorzugsweise eines Last- oder Sattelzugs, das zur Ausführung des Verfahrens (100) nach einem der vorhergehenden Ansprüchen ausgebildet ist.

13. Nutzfahrzeug (200), vorzugsweise Last- oder Sattelzug, umfassend eine Steuereinheit (10) nach Anspruch 12.

14. Nutzfahrzeug (200) nach Anspruch 13, ferner umfassend mindestens eine der folgenden Fahrzeugkomponenten, die signaltechnisch mit der Steuereinheit (10) verbunden sind:
ein elektronisches Stabilitätsprogramm (20), ESP, das vorzugsweise eine Überrollschutz-Funktion und/oder eine Gierregelung umfasst;
ein Notbremsassistenzsystem (22);
ein Airbag-Steuergerät (24);
eine Heck-Beleuchtungseinrichtung (26);
eine Seiten-Beleuchtungseinrichtung (28); und
elektrische Leitungen (30), mit denen ein oder mehrere Seitenverkleidungsteile des Nutzfahrzeugs (200) versehen sind.

## Claims

1. Method (100) for recognising an accident situation of a utility vehicle (200), preferably a lorry or articulated lorry, wherein the accident situation can be assigned to at least one of several accident scenarios which comprise at least one overturning and one skidding of the utility vehicle (200), the method (100) comprising the steps:
Provision (S1) of the multiple accident scenarios, to each of which at least one measurement and/or status variable of one or more vehicle components and at least one criterion for evaluating the at least one measurement and/or status variable are assigned;
Monitoring and evaluating (S2) the at least one measurement and/or status variable using the at least one criterion for each of the multiple accident scenarios;
Determining (S3) that at least one of the plurality of accident scenarios is present when the at least one criterion associated with the at least one of the plurality of accident scenarios is met; and
Recognising (S4) an accident situation if it is determined that at least one of the several accident scenarios is present;
**wherein,** the accident scenarios also
a) comprising a rear collision of the utility vehicle (200), and wherein
a1) a state of a rear lighting device (26) and a longitudinal acceleration of the utility vehicle (200) detected by means of an airbag control unit (24) are associated with the rear collision as accident scenario as measured and/or state variables, and
a2) it is determined that the rear-end collision is present as an accident scenario if a criterion associated with the rear-end collision as an accident scenario is fulfilled, that the state of the rear lighting device (26) indicates a defect and the longitudinal acceleration is above a longitudinal acceleration limit value; and/or
b) comprising a lateral collision, and wherein
b1) a state of a side lighting device (28) and a lateral acceleration of the utility vehicle (200), the lateral acceleration being measured by means of an electronic stability programme (20), ESP, are assigned to as measured and/or state variables to the lateral collision as accident scenario; and
b2) it is determined that the side collision is present as an accident scenario if a criterion assigned to the side collision as an accident scenario is fulfilled, that the state of the side lighting device (28) indicates a defect and the lateral acceleration is above a lateral acceleration limit value.

2. Method (100) according to claim 1, wherein a state of an electronic stability programme (20), ESP, and a differential rotational speed determined by means of the ESP (20) between two vehicle wheels of the utility vehicle (200) arranged on a vehicle axle are assigned to the overturning as an accident scenario as measured and/or state variables.

3. The method (100) according to claim 2, wherein it is determined that the overturning as an accident scenario is present if a criterion associated with the overturning as an accident scenario is fulfilled, that the state of the ESP (20) indicates that the ESP (20), which preferably comprises a rollover protection function, intervenes in a driving operation of the utility vehicle (200) and brakes all wheels of the utility vehicle (200), and the differential speed is above a differential speed limit value.

4. Method (100) according to one of the preceding claims, wherein a state of an electronic stability programme (20), ESP, and a yaw moment of the utility vehicle (200) measured by means of the ESP (20) are assigned to the skidding as an accident scenario as measured and/or state variables.

5. The method (100) according to claim 4, wherein it is determined that the skidding is present as an accident scenario if a criterion associated with the skidding as an accident scenario is fulfilled, that the state of the ESP (20) indicates that the ESP (20), which preferably comprises a yaw control system intervenes in a driving operation of the utility vehicle (200) and selectively brakes wheels of the utility vehicle (200) to compensate for oversteer or understeer of the utility vehicle (200), and the yaw moment is above a yaw moment limit value.

6. Method (100) according to one of the preceding claims according to variant b) of claim 1,
wherein
a) a state of electrical lines (30), which are in and/or on one or more side panelling parts of the utility vehicle (200), is also assigned to the side collision as an accident scenario as one of the measurement and/or state variables, and
b) it is determined that the lateral collision is present as an accident scenario if a criterion assigned to the lateral collision as an accident scenario is fulfilled, that the state of the electrical lines (30) indicates a severing of one or more of the electrical lines (30).

7. The method (100) according to any one of the preceding claims, wherein the accident scenarios further comprise a frontal collision, and wherein
a) a state of an airbag control unit (24) and a state of an emergency brake assistance system (22) are assigned to the frontal collision as an accident scenario as measured and/or state variables, and
b) it is determined that the frontal collision is present as an accident scenario if a criterion assigned to the frontal collision as an accident scenario is fulfilled, that the state of the airbag control unit (24) indicates that an airbag is deployed and the state of the emergency brake assistance system (22) indicates that a collision is unavoidable.

8. The method (100) according to claim 7, wherein
a) a residual speed of the utility vehicle (200) detected by means of the emergency brake assistance system (22) in the event of a collision is also assigned to the frontal collision as an accident scenario as one of the measured and/or state variables, and
b) it is determined that the frontal collision is an accident scenario if a criterion assigned to the frontal collision as an accident scenario is fulfilled, i.e. that the residual speed is above a residual speed limit value.

9. The method (100) according to any one of the preceding claims, wherein the method (100) further comprises:
Classification (S5) of the recognised accident situation as a safety-critical accident situation, and
Performing (S6) a safety measure of the utility vehicle (200) if the detected accident situation is classified as a safety-critical accident situation.

10. The method (100) according to claim 7, wherein the detected accident situation is classified as a safety-critical accident situation if it is determined that
a) the rear-end collision is an accident scenario according to variant a) of claim 1 and the skidding is an accident scenario according to claim 5, and/or
b) the lateral collision is present as an accident scenario according to 6 and the skidding is present as an accident scenario according to claim 5, and/or
c) the overturning is an accident scenario according to claim 3, and/or
d) the frontal collision is an accident scenario according to claim claim 8.

11. The method (100) according to claim 9 or 10, wherein the utility vehicle (200) is an electrically drivable utility vehicle, and performing a safety measure comprises switching off a high-voltage network (80) and/or a hydrogen supply (82) of the utility vehicle (200).

12. Control unit (10) for recognising an accident situation of a utility vehicle (200), preferably a truck or articulated lorry, which is configured to carry out the method (100) according to one of the preceding claims.

13. Utility vehicle (200), preferably a lorry or articulated lorry, comprising a control unit (10) according to claim 12.

14. The utility vehicle (200) according to claim 13, further comprising at least one of the following vehicle components signallingly connected to the control unit (10):
an electronic stability programme (20), ESP, which preferably includes a rollover protection function and/or yaw control;
an emergency braking assistance system (22);
an airbag control unit (24);
a rear lighting device (26)
a side lighting device (28); and
electrical cables (30) with which one or more side panelling parts of the utility vehicle (200) are provided.

## Revendications

1. Procédé (100) de détection d'une situation d'accident d'un véhicule utilitaire (200), de préférence un camion ou un semi-remorque, la situation d'accident pouvant être associée à au moins l'un de multiples scénarios d'accident, qui comprennent au moins un renversement et un dérapage du véhicule utilitaire (200), le procédé (100) comprenant les étapes consistant à :
fournir (S1) les multiples scénarios d'accident, auxquels sont respectivement associées au moins une grandeur de mesure et/ou d'état d'un ou plusieurs composants de véhicule et au moins un critère pour évaluer ladite au moins une grandeur de mesure et/ou d'état ;
surveiller et évaluer (S2) ladite au moins une grandeur de mesure et/ou d'état sur la base dudit au moins un critère pour chacun des multiples scénarios d'accident ;
constater (S3) qu'au moins l'un des multiples scénarios d'accident est présent lorsque ledit au moins un critère,
qui est associé audit au moins un des multiples scénarios d'accident, est rempli ; et
détecter (S4) une situation d'accident, lorsqu'il est constaté qu'au moins l'un des multiples scénarios d'accident est présent ;
dans lequel les scénarios d'accident comprennent en outre
a) une collision arrière du véhicule utilitaire (200), et dans lequel
a1) un état d'un dispositif d'éclairage arrière (26) et une accélération longitudinale du véhicule utilitaire (200) détectée au moyen d'un appareil de commande de coussin gonflable (24) sont associés à la collision arrière en tant que scénario d'accident, et
a2) il est constaté que la collision arrière est présente en tant que scénario d'accident lorsqu'un critère associé à la collision arrière en tant que scénario d'accident est rempli, à savoir que l'état du dispositif d'éclairage arrière (26) indique un défaut et que l'accélération longitudinale est supérieure à une valeur limite d'accélération longitudinale ; et/ou
b) une collision latérale, et dans lequel
b1) à la collision latérale, en tant que scénario d'accident, sont associés un état d'un dispositif d'éclairage latéral (28), et une accélération transversale du véhicule utilitaire (200) mesurée au moyen d'un programme de stabilité électronique (20), ESP, en tant que grandeurs de mesure et/ou d'état ; et
b2) il est constaté que la collision latérale est présente en tant que scénario d'accident lorsqu'un critère associé à la collision latérale en tant que scénario d'accident est rempli, à savoir que l'état du dispositif d'éclairage latéral (28) indique un défaut et que l'accélération transversale est supérieure à une valeur limite d'accélération transversale.

2. Procédé (100) selon la revendication 1, dans lequel au renversement en tant que scénario d'accident sont associés un état d'un programme de stabilité électronique (20), ESP, et une vitesse de rotation différentielle déterminée au moyen de l'ESP (20) entre deux roues de véhicule du véhicule utilitaire (200) disposées sur un essieu de véhicule en tant que grandeurs de mesure et/ou d'état.

3. Procédé (100) selon la revendication 2, dans lequel il est constaté que le renversement est présent en tant que scénario d'accident lorsqu'un critère associé au renversement en tant que scénario d'accident est rempli, à savoir que l'état de l'ESP (20) indique que l'ESP (20), qui comprend de préférence une fonction de protection anti-tonneau, intervient dans un mode de conduite du véhicule utilitaire (200) et freine toutes les roues du véhicule utilitaire (200), et que la vitesse de rotation différentielle est supérieure à une valeur limite de vitesse de rotation différentielle.

4. Procédé (100) selon l'une quelconque des revendications précédentes, dans lequel au dérapage en tant que scénario d'accident sont associés un état d'un programme de stabilité électronique (20), ESP, et un moment de lacet du véhicule utilitaire (200) mesuré au moyen de l'ESP (20) en tant que grandeurs de mesure et/ou d'état.

5. Procédé (100) selon la revendication 4, dans lequel il est constaté que le dérapage est présent en tant que scénario d'accident lorsqu'un critère associé au dérapage en tant que scénario d'accident est rempli, à savoir que l'état de l'ESP (20) indique que l'ESP (20), qui comprend de préférence une régulation de lacet, intervient dans un mode de conduite du véhicule utilitaire (200) et freine sélectivement des roues du véhicule utilitaire (200) pour compenser un survirage ou un sous-virage du véhicule utilitaire (200), et que le moment de lacet est supérieur à une valeur limite de moment de lacet.

6. Procédé (100) selon l'une quelconque des revendications précédentes et selon la variante b) de la revendication 1, dans lequel
a) à la collision latérale en tant que scénario d'accident est en outre associé un état de lignes électriques (30), qui sont disposées dans et/ou sur une ou plusieurs parties de garniture latérale du véhicule utilitaire (200), en tant que l'une des grandeurs de mesure et/ou d'état, et
b) il est constaté que la collision latérale est présente en tant que scénario d'accident lorsqu'un critère associé à la collision latérale en tant que scénario d'accident est rempli, à savoir que l'état des lignes électriques (30) indique un sectionnement d'une ou plusieurs des lignes électriques (30).

7. Procédé (100) selon l'une quelconque des revendications précédentes, dans lequel les scénarios d'accident comprennent en outre une collision frontale, et dans lequel
a) à la collision frontale en tant que scénario d'accident sont associés un état d'un appareil de commande de coussin gonflable (24) et un état d'un système d'assistance au freinage d'urgence (22) en tant que grandeurs de mesure et/ou d'état, et
b) il est constaté que la collision frontale est présente en tant que scénario d'accident lorsqu'un critère associé à la collision frontale en tant que scénario d'accident est rempli, à savoir que l'état de l'appareil de commande de coussin gonflable (24) indique un déclenchement d'un coussin gonflable et que l'état du système d'assistance au freinage d'urgence (22) indique qu'une collision est inévitable.

8. Procédé (100) selon la revendication 7, dans lequel
a) à la collision frontale en tant que scénario d'accident est en outre associée une vitesse résiduelle du véhicule utilitaire (200) détectée au moyen du système d'assistance au freinage d'urgence (22) en cas de collision en tant que l'une des grandeurs de mesure et/ou d'état, et
b) il est constaté que la collision frontale est présente en tant que scénario d'accident lorsqu'un critère associé à la collision frontale en tant que scénario d'accident est rempli, à savoir que la vitesse résiduelle est supérieure à une valeur limite de vitesse résiduelle.

9. Procédé (100) selon l'une quelconque des revendications précédentes, dans lequel le procédé (100) consiste en outre à :
classer (S5) la situation d'accident détectée comme étant une situation d'accident critique pour la sécurité, et prendre (S6) une mesure de sécurité sur le véhicule utilitaire (200) lorsque la situation d'accident détectée est classée comme étant une situation d'accident critique pour la sécurité.

10. Procédé (100) selon la revendication 7, dans lequel la situation d'accident détectée est classée comme étant une situation d'accident critique pour la sécurité lorsqu'il est constaté que
a) la collision arrière en tant que scénario d'accident selon la variante a) de la revendication 1 et le dérapage en tant que scénario d'accident selon la revendication 5 sont présents, et/ou
b) la collision latérale en tant que scénario d'accident selon la variante b) de la revendication 1 ou selon la revendication 6 et le dérapage en tant que scénario d'accident selon la revendication 5 sont présents, et/ou
c) le renversement en tant que scénario d'accident selon la revendication 3 est présent, et/ou
d) la collision frontale en tant que scénario d'accident selon la revendication 8 est présente.

11. Procédé (100) selon la revendication 9 ou 10, dans lequel le véhicule utilitaire (200) est un véhicule utilitaire à propulsion électrique, et la mesure de sécurité prise consiste à interrompre un réseau haute tension (80) et/ou une alimentation en hydrogène (82) du véhicule utilitaire (200).

12. Unité de commande (10) destinée à détecter une situation d'accident d'un véhicule utilitaire (200), de préférence un camion ou un semi-remorque, qui est conçue pour mettre en œuvre le procédé (100) selon l'une quelconque des revendications précédentes.

13. Véhicule utilitaire (200), de préférence camion ou semi-remorque, comprenant une unité de commande (10) selon la revendication 12.

14. Véhicule utilitaire (200) selon la revendication 13, comprenant en outre au moins l'un des composants de véhicule suivants, qui sont connectés par une technique de signaux à l'unité de commande (10) :
un programme de stabilité électronique (20), ESP, qui comprend de préférence une fonction de protection anti-tonneau et/ou une régulation de lacet ;
un système d'assistance au freinage d'urgence (22) ;
un appareil de commande de coussin gonflable (24) ;
un dispositif d'éclairage arrière (26) ;
un dispositif d'éclairage latéral (28) ; et
des lignes électriques (30), dont sont pourvues une ou plusieurs parties de garniture latérale du véhicule utilitaire (200).
